# EUROPÄISCHE PATENTANMELDUNG

(11) **EP 0 538 620 A1**
(43) Veröffentlichungstag der Anmeldung: **28.04.1993**
(21) Anmeldenummer: 92115747.5
(22) Anmeldetag: 15.09.1992
(51) Int. Cl.: H01R 39/38, H02K 5/14

(54) **Elektrische Maschine**

(30) Priorität: 19.10.1991 DE 4134625; 24.07.1992 DE 4224507
(71) Anmelder: VDO Adolf Schindling AG, D-60487 Frankfurt (DE)
(72) Erfinder: Berberich, Reinhold, W-6000 Frankfurt 50 (DE)
(74) Vertreter: Klein, Thomas, Dipl.-Ing. (FH)

(57) **Zusammenfassung**

Bei einer elektrischen Maschine sind die gegen den Kollektor (3) anliegenden Kohlebürsten (4, 5) kreisringförmig gekrümmt ausgeführt, wobei ihr äußerer Radius kleiner als der Abstand zwischen dem Stator (1) und dem Kollektor (3) des Rotors (2) ist und die Kohlebürsten (4,5) von der Feder (9, 10) entlang einer Kreisbogenbahn verschieblich angeordnet sind und weitgehend im Bereich der radialen Umfangsperipherie des Stators (1) liegen.

## Beschreibung

Die Erfindung betrifft eine elektrische Maschine, bestehend aus einem Stator und einem Rotor, dessen Wicklungen über Kohlebürsten mit dem Stator Verbindung haben, wobei die Kohlebürsten durch eine Feder mit ihrem freien Ende gegen einen Kollektor des Rotors vorgespannt sind.

Maschinen der vorstehenden Art können als Generator oder Motor ausgebildet sein. Da ihre feststehenden Kohlebürsten gegen den rotierenden Kollektor anliegen, kommt es zwangsläufig zu einem Verschleiß der Kohlebürsten, so daß diese von Zeit zu Zeit erneuert werden müssen. Wenn man die Zeitintervalle bis zum erforderlichen Auswechseln der Kohlebürsten groß halten will, dann muß man relativ lange Kohlebürsten verwenden. Das führt jedoch dazu, daß infolge der radialen Anordnung der Kohlebürsten der Durchmesser der elektrischen Maschine groß genug sein muß, um solche langen Kohlebürsten unterbringen zu können. Ein solcher, relativ großer Durchmesser ist jedoch oftmals aus Platzgründen nicht erwünscht.

Bei einer bekannten Bürstenanordnung für Kommutatormotoren sind im Hinblick auf die Vereinfachung der Fertigung und Montage der Bürstenanordnung die Kohlebürsten, welche von je einer Feder geführt werden, leicht gebogen gestaltet.Dadurch wird erreicht, daß die Andruckkräfte der durch einen Hebelarm geführten Kohlebürsten immer zum Mittelpunkt des Kollektors weisen.

Die Kohlebürsten sind mit ihrer dem Kollektor abgewandten Seite mit dem Hebelarm der Feder fest verbunden. Jedoch bringt auch diese Ausführungsform keinerlei Vorteile hinsichtlich einer Lebensdauererhöhung.

Der Erfindung liegt die Aufgabe zugrunde, eine elektrische Maschine der eingangs genannten Art so auszubilden, daß sie möglichst lange Kohlebürsten aufweisen kann, ohne einen unerwünscht großen Durchmesser der Maschine zu bedingen.

Die Aufgabe wird erfindungsgemäß dadurch gelöst, daß die Kohlebürsten kreisringförmig gekrümmt sind, wobei ihr äußerer Radius kleiner als der Abstand zwischen dem Stator und dem Kollektor des Rotors ist und die Kohlebürsten von der Feder entlang einer Kreisbogenbahn verschieblich angeordnet sind und weitgehend im Bereich der radialen Umfangsperipherie des Stators liegen.

Durch die erfindungsgemäße kreisringförmig gekrümmte Ausbildung der Kohlebürsten wird die Lebensdauer der elektrischen Maschine entscheidend verlängert, da die Kohlebürsten eine relativ große Länge aufweisen, ohne daß dadurch der Durchmesser der Maschine entsprechend zunehmen muß. Deshalb eignet sich die Maschine besonders für solche Anwendungsfälle, bei denen beengte Platzverhältnisse gegeben sind, die jedoch wegen eines ständigen Laufens der elektrischen Maschine einen relativ hohen Verschleiß der Kohlebürsten bedingen. Ein bevorzugter Anwendungsfall der Erfindung ist das Fördern von Kraftstoff aus einem Kraftstofftank. Die elektrische Maschine ist dabei als Motor ausgebildet und dient zum Antrieb einer im Kraftstofftank angeordneten Tauchpumpe. Sie ist deshalb für ein Auswechseln der Kohlebürsten kaum zugänglich.

Eine einfache Ausgestaltung der Erfindung besteht darin, daß die Kohlebürsten vollständig im Bereich der radialen Umfangsperipherie des Stators angeordnet sind. Die Kohlebürsten sind mühelos in der elektrischen Maschine anzuordnen, ohne die konstruktiven Abmaße der Maschine verändern zu müssen. Die Länge der Kohlebürsten beträgt in diesem Fall mehr als das Doppelte des Abstandes zwischen Stator und Kollektor des Rotors der elektrischen Maschine.

Die Kohlebürsten sind auf sehr einfache Weise geführt, wenn sie gemäß einer vorteilhaften Ausgestaltung der Erfindung jeweils in einem kreisringförmig gekrümmten, an der Innenseite einen Schlitz aufweisenden Schacht angeordnet sind.

Die erforderliche Andrückkraft der Kohlebürsten gegen den Kollektor kann auf einfache Weise dadurch erzeugt werden, daß die Feder eine Schenkelfeder ist, die mit ihrem einen Ende um eine Drehachse schwenkbar angeordnet ist und mit dem freien Ende die Kohlebürsten beaufschlagt, wobei das die Kohlebürsten beaufschlagende Ende des Federarmes durch den Schlitz in den Schacht ragt und gegen die dem Kollektor abgewandte Stirnfläche der Kohlebürsten anliegt.

Auf einen Schacht zur Führung der jeweiligen Kohlebürste kann gemäß einer anderen Weiterbildung der Erfindung verzichtet werden, wenn die Kohlebürste ausschließlich durch mechanische Verbindung mit dem drehbar gelagerten Führungsarm geführt ist. Bei einer solchen Ausführungsform wird die Kohlebürste von der Feder auf dem durch den Führungsarm bestimmten Radius geführt.

Die Befestigung des Federarmes mit der dem Kollektor abgewandten Stirnfläche der jeweiligen Kohlebürste ist besonders einfach, wenn gemäß einer anderen Ausgestaltung der Erfindung die Feder eine Spiral-Blattfeder ist. Eine solche Spiral-Blattfeder vermag das mit ihr verbundene Ende der Kohlebürste in radialer und axialer Richtung zu führen.

Ein zusätzliches Führungsteil kann dabei zur besseren Fixierung der Kohlebürsten beitragen.

Die Erfindung läßt zahlreiche Ausführungsformen zu. Zur weiteren Verdeutlichung ihres Grundprinzips sind drei davon in der Zeichnung schematisch dargestellt und werden nachfolgend beschrieben. In ihr zeigen die
- Fig. 1: einen Blick auf die Kollektorseite einer erfindungsgemäßen Maschine,
- Fig. 2: eine perspektivische Darstellung einer Kohlebürste mit angrenzenden Bauteilen,
- Fig. 3: eine der Fig. 2 entsprechende Darstellung einer zweiten Ausführungsform der Maschine,
- Fig. 4: eine der Fig. 2 entsprechende Darstellung einer dritten Ausführungsform der Maschine.

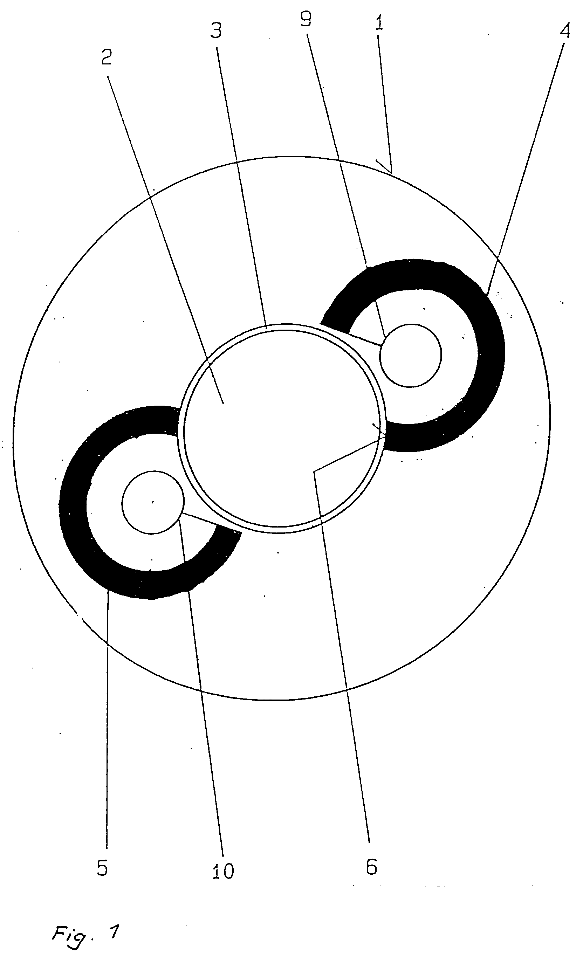

Die Fig. 1 zeigt von der Rückseite eine als Kommutatormotor ausgebildete elektrische Maschine, welche einen Stator 1 und einen Rotor 2 mit einem Kollektor 3 hat, gegen den zwei kreisringförmig gekrümmte Kohlebürsten 4, 5 mit jeweils einer Stirnfläche 6 anliegen.

Die Kohlebürsten 4,5 sind vollständig im Bereich der radialen Peripherie des Stators 1 angeordnet.

Die Fig. 1 läßt erkennen, daß die Kohlebürsten 4, 5 so zueinander versetzt angeordnet sind, daß die Andrückkräfte jeweils zum Mittelpunkt des Kollektors 3 weisen.

Die Federn 9, 10 drücken die Kohlebürsten 4, 5 gegen den Kollektor. Mit zunehmendem Verschleiß nähert sich das dem Kollektor abgewandte Ende auf der durch die Kohlebürsten selbst beschriebenen Kreisbahn dem Kollektor.

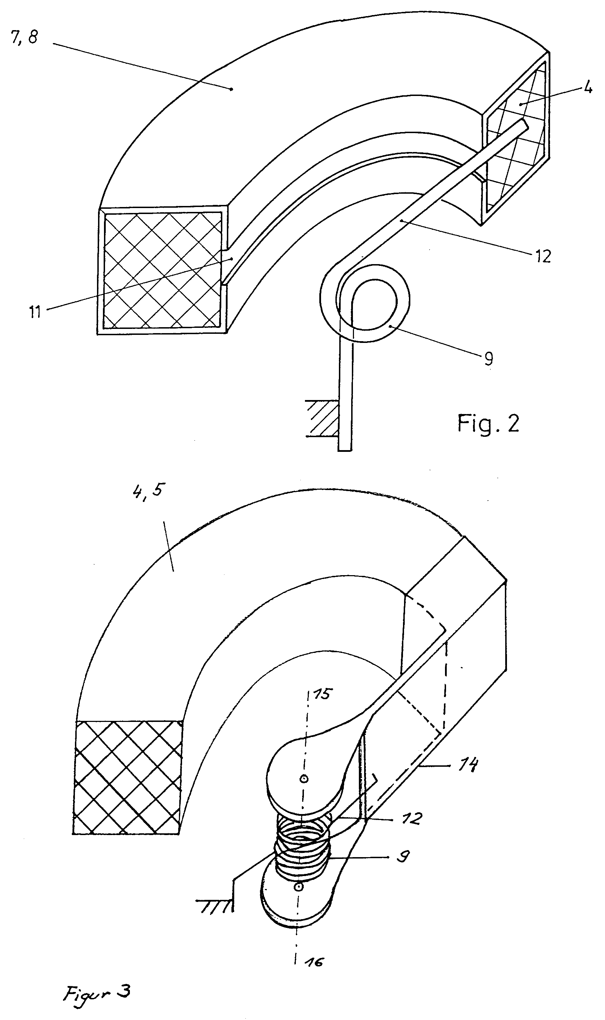

Die perspektivische Darstellung gemäß Fig. 2 zeigt eine mögliche Ausführungsform der Erfindung, bei der die Führung der Kohlebürsten durch kreisringförmig gekrümmte Schächte 7, 8 erfolgt. Diese weisen jeweils auf der Innenseite einen über ihre gesamte Länge verlaufenden Schlitz 11 auf, durch den ein Federarm 12 der Feder 9 greift, welcher gegen die dem Kollektor 3 (Fig. 1) abgewandte Stirnfläche der Kohlebürste 4 anliegt und diese dadurch zum Kollektor 3 hin vorspannt.

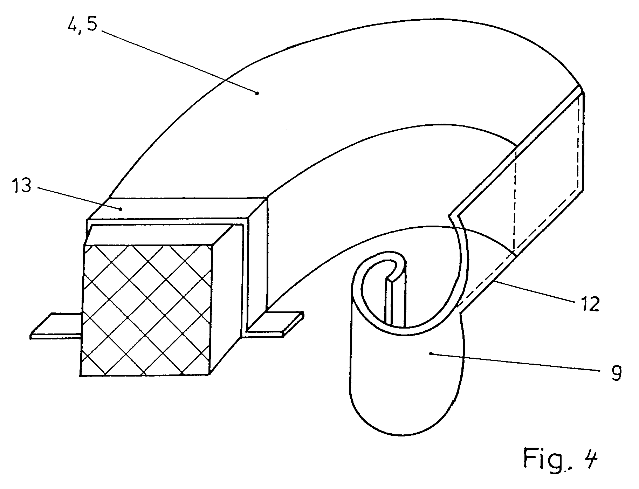

Bei der Ausführungsform nach Fig. 3 werden die Kohlebürsten 4, 5 statt von einem Schacht 7, 8 durch den, um die Achse 15, 16 drehbar gelagerten Führungsarm 14 geführt. Der Führungsarm 14 ist auf der dem Kollektor abgewandten Ende mit der Kohlebürste 4 bzw. 5 fest verbunden. Die Kohlebürsten 4, 5 erfahren ihre Andruckkraft jeweils über das Führungsteil 14 durch den Federarm 12 der Feder 9.

Um diese Verbindung möglichst einfach zu gestalten, ist, wie aus Fig. 4 ersichtlich, die Feder 9 als Spiral-Blattfeder ausgebildet. Die Kohlebürste 4, 5 kann zur besseren Fixierung mittels eines Führungsteiles 13 nahe des in Fig. 1 gezeigten Kollektors 3 zusätzlich geführt werden.

## Patentansprüche

1. Elektrische Maschine bestehend aus einem Stator und einem Rotor, dessen Wicklungen über gekrümmte Kohlebürsten mit dem Stator Verbindung haben, wobei die Kohlebürsten durch eine Feder mit ihrem einen freien Ende etwa radial gegen einen Kollektor des Rotors vorgespannt sind, dadurch gekennzeichnet, daß die Kohlebürsten (4, 5) kreisringförmig gekrümmt sind, wobei ihr äußerer Radius kleiner als der Abstand zwischen dem Stator (1) und dem Kollektor (3) des Rotors (2) ist und die Kohlebürsten (4, 5) von der Feder (9, 10) entlang einer Kreisbogenbahn verschieblich angeordnet sind und weitgehend im Bereich der radialen Umfangsperipherie des Stators (1) liegen.

2. Elektrische Maschine nach Anspruch 1, dadurch gekennzeichnet, daß die Kohlebürsten (4, 5) vollständig im Bereich der radialen Umfangsperipherie des Stators (1) angeordnet sind.

3. Elektrische Maschine nach Anspruch 2, dadurch gekennzeichnet, daß die Länge der Kohlebürsten (4, 5) größer als der Abstand zwischen Stator (1) und Kollektor (3) des Rotors (2) ist.

4. Elektrische Maschine nach Anspruch 1, dadurch gekennzeichnet, daß die Kohlebürsten (4, 5) jeweils in einem kreisringförmig gekrümmten, an der Innenseite einen entsprechend den Kohlebürsten radial umlaufenden Schlitz (11) aufweisenden Schacht (7, 8) angeordnet sind.

5. Elektrische Maschine nach Anspruch 4, dadurch gekennzeichnet, daß die Feder (9, 10) eine Schenkelfeder ist, die mit ihrem einen Ende um eine Drehachse schwenkbar angeordnet ist und mit dem freien Ende die Kohlebürste (4, 5) beaufschlagt, wobei das die Kohlebürste (4, 5) beaufschlagende Ende des Federarmes (12) durch den Schlitz (11) in den Schacht ragt und gegen die dem Kollektor (3) abgewandte Stirnfläche der Kohlebürsten (4, 5) anliegt.

6. Elektrische Maschine nach Anspruch 5, dadurch gekennzeichnet, daß das freie Ende eines drehbar gelagerten Führungsarmes (14) ausschließlich mechanisch mit der dem Kollektor (3) abgewandten Seite der Kohlebürsten (4, 5) verbunden ist.

7. Elektrische Maschine nach Anspruch 6, dadurch gekennzeichnet, daß der Führungsarm (14) und die Feder (9 bzw. 10) nur ein Bauteil sind.

8. Elektrische Maschine nach Anspruch 7, dadurch gekennzeichnet, daß das Bauteil eine Spiral-Blattfeder ist.

9. Elektrische Maschine nach Anspruch 6, dadurch gekennzeichnet, daß ein Führungsteil (13) nahe dem Kollektor (3) angebracht ist.
